## Europäisches Patentamt

(19) **European Patent Office**

**Office européen des brevets**

(11) Publication number: **0 297 684 B1**

(12) **EUROPEAN PATENT SPECIFICATION**

(45) Date of publication of the patent specification: **07.11.90**

(51) Int. Cl.⁵: **B26D 3/06, B29C 65/12, B29C 65/00, E04F 21/22**

(21) Application number: **88201355.0**

(22) Date of filing: **29.06.88**

(54) A device for forming grooves in floor covering material.

(30) Priority: **02.07.87 NL 8701555**

(43) Date of publication of application:
**04.01.89 Bulletin 89/1**

(45) Publication of the grant of the patent:
**07.11.90 Bulletin 90/45**

(84) Designated Contracting States:
**BE DE IT LU NL**

(56) References cited:
**DE-A- 3 318 914**
**DE-B- 1 082 041**
**FR-A- 2 035 199**
**FR-A- 2 042 892**
**FR-A- 2 493 890**
**US-A- 3 996 824**
**US-A- 4 656 910**

(73) Proprietor: **Forbo-Krommenie B.V., Industrieweg 12, NL-1566 JP Assendelft(NL)**

(72) Inventor: **Baltes, Wilhelmus Petrus, 6, Zwaanstraat, Krommenie(NL)**

(74) Representative: **Mommaerts, Johan Hendrik, Dipl.-Phys., Octrooibureau Lux P.O. Box 90649, NL-2509 LP Den Haag(NL)**

## Description

The invention relates to a device for forming grooves in floor covering material according to the preamble of Claim 1. A device of this kind is known from DE-A 3 318 914. In such devices fraise tools are used by means of which a groove with a more or less curved bottom can be cut into the floor covering material. This tool is moved over de floor covering material in order to form therein the desired groove. A drawback of such tools is that they produce much dust and noise.

The invention provides a device for this purpose in which the drawbacks of the known fraise tools, are overcome by the features of the characterising part of Claim 1.

When required by the floor covering material, the heating apparatus softens said material, so that cutting said material is facilitated.

Further specific embodiments of the device according to the invention are defined in the subclaims.

The invention will be elucidated below by reference to a drawing, showing in:

Fig. 1 a diagrammatic cross-section of the device of the invention; and

Figs. 2, 3 and 4 partial sections along the lines II-II, III-III and IV-IV resp. of Fig.1.

The device according to the invention comprises a carrier 1 adapted to be displaced, on wheels 2, over floor covering material 3, for instance linoleum. At the lower side of the carrier 1 a gouge 4 is mounted, which in particular, consists of a piece of steel strip material bent in the form of a U and having at least one sharp edge, said gouge being fixed on said carrier 1 by means of a fixing element, diagrammatically shown at 5, in such an adjustable manner that the curve 4' of said gouge can penetrate into the floor covering material 3, so that, when moving the carrier 1 forwards, a groove 6 is cut into said material. The cut-out portion 6' arrives, then, on a guiding surface 7 by means of which it is removed upwards.

Ahead of the gouge 4 a sleeve 8 is mounted on the carrier 1, which sleeve communicates with a passage 9 in the carrier 1. Said sleeve 8 is adapted for accommodating and fixing therein a hot-air apparatus 10, diagrammatically indicated by dashed lines, e.g. a commercially obtainable hair dryer or the like of sufficient capacity, by means of which a flow of hot air can be directed towards the surface of the floor covering material 3 for softening that material if required, thus facilitating cutting thereof. Such apparatuses are commercially obtainable, and are provided with a thermostat for avoiding overheating. The air flow can, if required, be directed towards the gouge 4 by means of a guiding plate not shown.

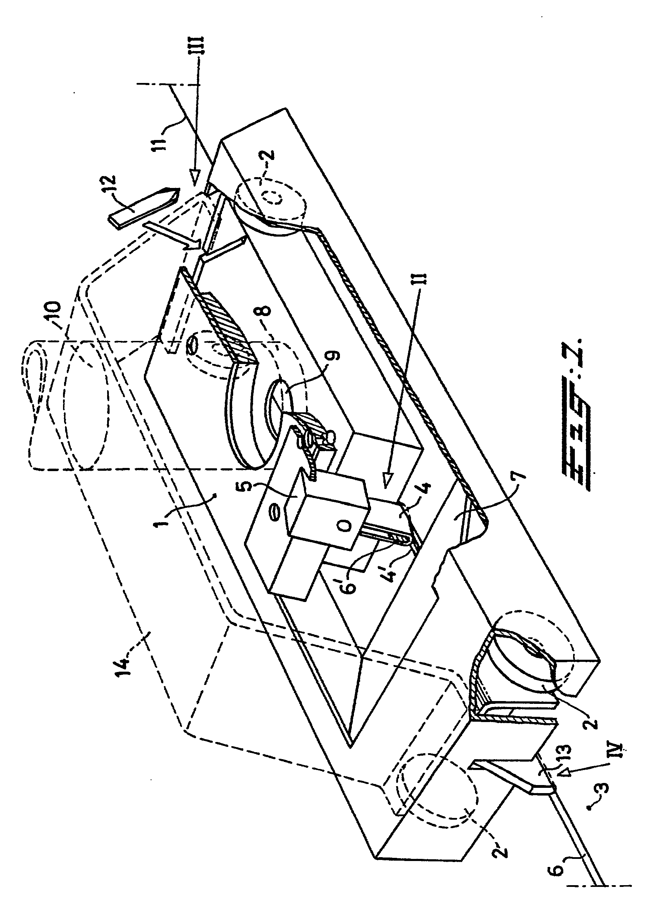

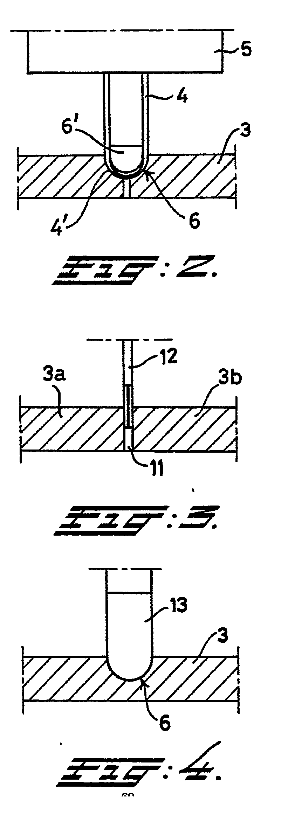

If, for instance, the edges of two webs 3a and 3b (Fig. 3) joining each other with a narrow intermediary slot 11, are to be chamfered so as to allow to melt, in the formed groove 6, a welding wire for interconnecting said webs, a guiding spur 12 is inserted into the slot 11, said spur guiding the carrier 1 along said slot 11. Furthermore a wider spur 13 arranged at the rear side of the carrier 1 can then be inserted into the formed groove 6 (Fig. 4). Said spurs can be mounted in a hinged or slidable manner. In this manner the tool can be efficiently guided along the seam between both webs 3a and 3b.

If, on the contrary, the groove 6 is to be formed into the floor covering material 3 according to a decorative pattern, in order to allow it to be filled afterwards with a welding wire having a contrasting colour, the front spur 12 can be inserted into a preformed groove or can be taken away as the case may be, and the rear spur 13 will only be used in the case of straight grooves. For such uses, however, generally guiding templates or rulers or the like will be used.

If required an additional bracket 14 can be provided for supporting the heating apparatus 10, which can be used also as a handle.

## Claims

1. A device for forming grooves (6) in floor covering material (3) such as linoleum for applying a welding wire into said groove, comprising a carrier (1) having running wheels (2), by means of which said carrier (1) can be moved over the floor covering material (3), characterised in that said carrier may have sliding surfaces instead of wheels and in that by a support (8) is provided on said carrier (1) for accommodating, if required, a heating apparatus (10), and by a gouge (4) arranged, as seen in the direction of movement, behind said support (8), said gouge extending over a distance corresponding to the desired depth of the groove (6) beyond the lower surface of the carrier (1).

2. The device of claim 1, characterised in that, the heating apparatus (10) is a hot air apparatus with thermostatic protection, and in that its support (8) communicates with a passage (9) through the carrier (1).

3. The device of claim 2, characterised in that , at the mouth of the support (8) at the lower side of the carrier (1) a guiding plate is provided for directing the air flow towards the gouge (4).

4. The device of any one of claims 1 to 3, characterised by a discharge surface (7) for cut-out material (6') joining said gouge (4) and extending through said carrier (1).

5. The device of any one of claims 1 to 4, characterised in that, at the front side of the carrier (1), a guiding spur (12) is or can be provided, fitting into a slot (11) between two adjoining floor covering webs (3a, 3b) or into a pre-formed groove.

6. The device of any one of claims 1 to 5, characterised in that, at the rear side of the carrier (1), a guiding spur (13) is or can be provided, fitting into the formed groove (6).

7. The device of any one of claims 1 to 6, characterised in that, the gouge (4) is formed by a piece of steel strip bent in the form of a U having at least one sharp edge, and being adapted to be connected on the carrier (1) by means of an adjustable connection (5).

## Patentansprüche

1. Vorrichtung zum Herstellen von Rillen (6) in einem Fussbodenbelag (3), wie beispielsweise Linoleum, zum Einbringen eines Schweissdrahts in die Rille, enthaltend einen Träger (1) mit Laufrädern (2), mittels denen der Träger (1) über den Fussbodenbelag (3) bewegt werden kann, dadurch gekennzeichnet, dass der Träger Gleitflächen anstelle von Rädern haben kann und dass ein Halter (8) an dem Träger (1) vorgesehen ist, um, falls notwendig, eine Heizvorrichtung (10) aufzunehmen, und durch eine Hohlklinge (4), die, in Bewegungsrichtung gesehen, hinter dem Halter (8) angeordnet ist und die sich über eine der gewünschten Rillentiefe (6) entsprechende Distanz über die Unterseite des Trägers (1) hinaus erstreckt.

2. Vorrichtung nach Anspruch 1, dadurch gekennzeichnet, dass die Heizvorrichtung (10) eine Heissluftvorrichtung mit thermostatischem Schutz ist und dass ihr Halter (8) mit einem Kanal (9) durch den Träger (1) in Verbindung steht.

3. Vorrichtung nach Anspruch 2, dadurch gekennzeichnet, dass an der Mündung des Halters (8) an der Unterseite des Trägers (1) eine Führungsplatte vorgesehen ist, um die Luftströmung gegen die Hohlklinge (4) zu richten.

4. Vorrichtung nach einem der Ansprüche 1 bis 3, gekennzeichnet durch eine Abgabefläche (7) für ausgeschnittenes Material (6'), die sich an die Hohlklinge (4) anschliesst und sich durch den Träger (1) erstreckt.

5. Vorrichtung nach einem der Ansprüche 1 bis 4, dadurch gekennzeichnet, dass an der Vorderseite des Trägers (1) eine Führungsnase (12) vorgesehen ist oder sein kann, die in einen Schlitz (11) zwischen zwei benachbarten Fussbodenbelagsbahnen (3a, 3b) oder in eine vorgeformte Rille eingreift.

6. Vorrichtung nach einem der Ansprüche 1 bis 5, dadurch gekennzeichnet, dass an der Hinterseite des Trägers (1) eine Führungsnase (13) vorgesehen ist oder sein kann, die in die gebildete Rille (6) eingreift.

7. Vorrichtung nach einem der Ansprüche 1 bis 6, dadurch gekennzeichnet, dass die Hohlklinge (4) durch einen Stahlbandabschnitt gebildet ist, der U-förmig gebogen ist und wenigstens eine scharfe Kante hat und dazu eingerichtet ist, an dem Träger (1) mittels einer Einstellbaren Verbindung (5) befestigt zu werden.

## Revendications

1. Dispositif pour former des rainures (6) dans un revêtement de sol (3), tel qu'un linoléum, pour appliquer un fil de soudure dans ladite rainure, comprenant un chariot (1) ayant des roues de roulement (2) grâce auxquelles le chariot (1) peut être déplacé sur le revêtement de sol (3), caractérisé en ce que le chariot peut avoir des surfaces de glissement à la place de roues et en ce qu'il est prévu sur le chariot (1) un support (8) pour recevoir, si nécessaire, un dispositif de chauffage (10), et une gouge (4) disposée, comme vu dans la direction du déplacement, derrière le support (8), cette gouge s'étendant sur un distance correspondant à la profondeur désirée de la rainure (6) au delà de la surface inférieure du chariot (1).

2. Dispositif selon la revendication 1, caractérisé en ce que le dispositif de chauffage (10) est un dispositif à air chaud avec une protection thermostatique et en ce que son support (8) communique avec un passage (9) traversant le chariot (1).

3. Dispositif selon la revendication 2, caractérisé en ce qu'une plaque de guidage est prévue à l'embouchure du support (8) au niveau du côté inférieur du chariot (1) pour diriger le courant d'air vers la gouge.

4. Dispositif selon l'une des revendications 1 à 3, caractérisé par une surface d'évacuation (7) pour le matériau découpé (6') se raccordant à la gouge (4) et s'étendant à travers le chariot (1).

5. Dispositif selon l'une des revendications 1 à 4, caractérisé en ce qu'une lame de guidage (12) est ou peut être prévue à l'avant du chariot (1) et se loge dans une fente (11) entre deux bandes (3a, 3b) de revêtement de sol adjacentes ou dans une rainure préalablement formée.

6. Dispositif selon l'une des revendications 1 à 5, caractérisé en ce qu'une lame de guidage (13) est ou peut être prévue à l'arrière du chariot (1) et se loge dans la gorge formée (6).

7. Dispositif selon l'une des revendications 1 à 6, caractérisé en ce que la gouge (4) est formée par une section d'une bande d'acier incurvée en forme de U, ayant au moins un bord tranchant, et adaptée pour être montée sur le chariot (1) au moyen d'un raccord réglable (5).

Fig. 2.

FIG: 2.

FIG: 3.

FIG: 4.